# FASCICULE DE BREVET EUROPEEN

(11) **EP 4 590 583 B1**
(45) Date de publication et mention de la délivrance du brevet: **04.11.2026**
(21) Numéro de dépôt: 23790714.2
(22) Date de dépôt: 15.09.2023
(51) Int. Cl.: B64D 37/32

(54) **PROCÉDÉ DE SÉLECTION D'UNE LOGIQUE D'ACTIVATION D'UN SYSTÈME D'INERTAGE D'UN RÉSERVOIR DE CARBURANT D'AÉRONEF**
AUSWAHLVERFAHREN FÜR EIN AKTIVIERUNGSSCHEMA EINER INERTISIERUNGSEINRICHTUNG EINES FLUGZEUGTREIBSTOFFTANKS.
METHOD OF SELECTING AN ACTIVATION LOGIC FOR AN INERTING SYSTEM OF AN AIRCRAFT FUEL TANK.

(30) Priorité: 20.09.2022 FR 2209466
(43) Date de publication de la demande: 30.07.2025
(73) Titulaire: Safran Aerosystems, 78370 Plaisir (FR)
(72) Inventeur: VOZY, Thibaut, 77550 MOISSY-CRAMAYEL (FR)
(74) Mandataire: Cabinet Camus Lebkiri
(86) Numéro de dépôt international: PCT/FR2023/051413
(87) Numéro de publication internationale: WO 2024/062181

(56) Documents cités:
- EP-B1- 3 281 677
- CN-A- 107 466 283
- US-A1- 2020 079 522
- US-B2- 10 179 308

## Description

### DOMAINE TECHNIQUE DE L'INVENTION

Le domaine technique de l'invention est celui des systèmes d'inertage de réservoirs de carburant d'aéronefs.

La présente invention concerne un procédé de sélection d'une logique d'activation d'un système d'inertage d'un réservoir de carburant d'un aéronef.

### ARRIERE-PLAN TECHNOLOGIQUE DE L'INVENTION

Les systèmes d'inertage ont pour but de sécuriser un volume comprenant des vapeurs dont le mélange avec un produit réactif, tel que l'air par exemple, présente un risque d'inflammabilité en remplaçant ledit produit réactif par un gaz neutre, le gaz neutre étant par exemple l'azote ou le dioxyde de carbone.

En particulier, les systèmes d'inertage de réservoirs de carburants d'aéronef, appelés FTIS en anglais ("Fuel Tank Inerting System "), sont des systèmes automatiques sans contrôle pilote ayant pour but d'empêcher la formation d'un mélange de vapeurs de carburant inflammable dans un ou plusieurs réservoirs de carburant, en préparant l'air de prélévement moteur puis en générant et en introduisant un gaz neutre dans les réservoirs de carburant.

Le document EP3176093A1 présente un système d'inertage de réservoir de carburant d'aéronef comprenant un générateur de gaz d'inertage alimenté avec de l'air de purge et des moyens de distribution du gaz d'inertage dans le ou les réservoirs de carburant, reliés au générateur de gaz d'inertage et intégrant un dispositif de mesure de la quantité d'oxygène présente dans ledit gaz d'inertage. Un générateur de gaz d'inertage de l'état de la technique comprend au moins un module de séparation d'air (ASM en anglais : "Air Separation Module") permettant de produire de l'azote à partir de l'air d'alimentation. Le document US2020/079522 A1 décrit un procédé de sélection d'une logique d'activation d'un système d'inertage d'un réservoir de carburant d'aéronef de l'état de la technique.

Cependant, l'air de prélévement moteur permettant d'alimenter les systèmes d'inertage est détourné d'au moins un turboréacteur de l'aéronef, ce qui cause donc une perte d'air sous pression qui pourrait par exemple servir à la propulsion de l'aéronef et à pressuriser et climatiser la cabine passagers. De plus, l'air sous pression permettant d'alimenter les systèmes d'inertage est une cause d'une usure des pièces du système d'inertage. L'usure de certaines pièces du système d'inertage ne permet pas d'avoir des composants dont la durée de vie est supérieure à celle de l'avion, ce qui implique/nécessite plusieurs opérations de maintenance au cours de la vie de l'avion.

Ainsi, il existe un besoin de réduire la consommation d'air alimentant un système d'inertage et de limiter l'usure des pièces dudit système d'inertage.

### RESUME DE L'INVENTION

L'invention offre une solution aux problèmes évoqués précédemment en adaptant le fonctionnement et l'activation du système d'inertage sans impacter la sécurité des vols et tout en réduisant la consommation d'air et en limitant l'usure des pièces du système d'inertage.

Un premier aspect de l'invention concerne un procédé de sélection d'une logique d'activation d'un système d'inertage d'au moins un réservoir de carburant d'un aéronef pour une mission de l'aéronef, le procédé comportant les étapes suivantes:
- Transmission de données relatives à la préparation de la mission à un calculateur;
- Estimation, par le calculateur, d'une pluralité de N risques d'inflammabilité du carburant compris dans le réservoir de carburant, N étant un entier naturel non nul, chaque risque d'inflammabilité étant estimé à partir:
   ∘ D'une unique logique d'activation du système d'inertage choisie parmi une pluralité de N logiques d'activation du système d'inertage; et
   ∘ des données relatives à la préparation de la mission;
- Sélection d'une logique d'activation, parmi la pluralité des N logiques d'activation, à partir de la pluralité des N risques d'inflammabilité estimés et à partir d'une condition relative au système d'inertage.

Par "logique d'activation du système d'inertage" on entend un chronogramme représentant l'évolution de l'état de fonctionnement du système d'inertage au cours du temps, le système d'inertage pouvant être un état de fonctionnement dit activé durant au moins une partie du temps et/ou pouvant être dans un état de fonctionnement dit désactivé durant au moins une autre partie du temps. Ainsi, l'axe horizontal du chronogramme représente le temps et l'axe vertical du chronogramme représente deux états logiques de l'état de fonctionnement du système d'inertage: un premier état dit "activé" et un deuxième état dit "désactivé". La partie du temps durant laquelle le système d'inertage est dans un état de fonctionnement activé comporte plusieurs périodes temporelles non nécéssairement consécutives, lesdites périodes temporelles étant par exemple espacées de périodes temporelles durant lesquelles le système d'inertage est dans un état désactivé.

Lorsque le système d'inertage est dans un état de fonctionnement dit "activé", le système électrique émet une puissance électrique vers le système d'inertage qui pourra être alimenté en air prélevé dans le moteur.

Lorsque le système d'inertage est dans un état de fonctionnement dit "désactivé", le système électrique est en veille électrique et n'émet pas de puissance électrique vers le système d'inertage qui n'est pas alimenté en air prélevé dans le moteur.

Le temps sur lequel est défini la logique d'activation est le temps de mission défini par la réglementation de certification défini par la FAA ( l'acronyme anglo-saxon "Federal Aviation Administration") dans le document AC25.981-2A daté du 19 septembre 2008 et intitulé « FUEL TANK FLAMMABILITY REDUCTION MEANS » et ses annexes comme le temps qui s'écoule à partir du début de la préparation de l'aéronef pour le vol, puis durant le vol et jusqu'à ce que toute la charge utile de l'aéronef soit déchargée et que tous les passagers et l'équipage aient débarqués après l'atterrissage du vol. Ainsi, la mission comprend une première phase où l'aéronef est au sol avant un vol et débute lors de la préparation de l'aéronef pour le vol, une deuxième phase où l'aéronef est en vol, et une troisième phase où l'aéronef est de nouveau au sol après ledit vol, la troisième phase se terminant lorsque toute la charge utile dudit aéronef est déchargée et que tous les passagers et l'équipage ont débarqués, les première, deuxième et troisième phases étant successives.

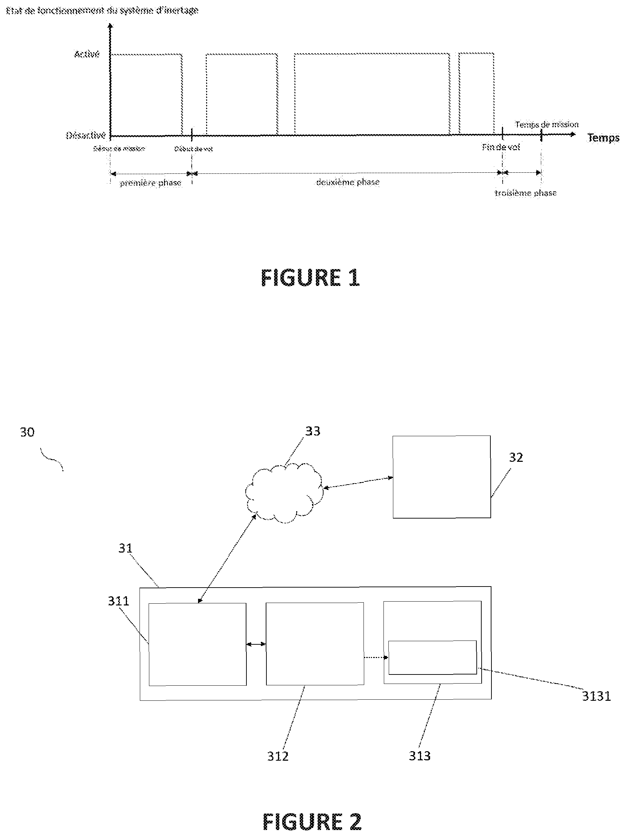

La [Fig. 1] est un exemple de logique d'activation.

Par "risque d'inflammabilité " on entend le ratio ou le pourcentage du cumul du temps durant lequel le carburant d'un réservoir de carburant est inflammable, sur le temps de mission, les temps étant exprimés en minutes.

Avantageusement, la logique d'activation sélectionnée permet de désactiver entièrement ou partiellement le système d'inertage du réservoir de carburant sans impacter la sécurité des vols car les risques d'inflammabilité sont pris en compte lors de la sélection. La logique d'activation sélectionnée prend également en compte une condition relative au système d'inertage.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- le risque d'inflammabilité estimé à partir de la logique d'activation sélectionnée est inférieur ou égal à un risque d'inflammabilité de référence estimé à partir d'une logique d'activation de référence. Avantageusement, si la logique d'activation de référence est par exemple une logique d'activation dans laquelle le système d'inertage est activé durant tout le temps de mission, la protection contre l'inflammabilité du carburant obtenue grâce à la logique d'activation sélectionnée est équivalente à la protection obtenue lorsque le système d'inertage est activé durant tout le temps de mission. Ainsi, l'invention permet de ne pas générer un gaz inerte quand il n'y a pas de risque d'inflammabilité du carburant.
- la mission comprend une phase durant laquelle l'aéronef est en vol et les données relatives à la préparation de la mission de l'aéronef comprennent au moins l'une des données suivantes:
   ∘ Type d'aéronef;
   ∘ Masse du carburant compris dans le réservoir de carburant de l'aéronef avant le vol;
   ∘ Température du carburant compris dans le réservoir de carburant de l'aéronef avant le vol;
   ∘ Destination du vol;
   ∘ Profil du vol, le profil du vol comprenant au moins l'une des données suivantes:
      ▪ Position géographique de l'aéronef durant le vol;
      ▪ Altitude de l'aéronef durant le vol;
      ▪ Vitesse air ou nombre de Mach durant le vol;
- chaque risque d'inflammabilité parmi les N risques d'inflammabilité est en outre estimé à partir de données météorologiques. Avantageusement, les données relatives à la préparation de la mission combinées aux données météorologiques permettent d'estimer précisément chaque risque d'inflammabilité, notamment grâce aux données météorologiques qui permettent de connaitre la température sur toute la mission et en particulier sur le profil du vol et non uniquement à un unique instant t, afin de prévoir en avance une logique d'activation permettant par exemple de désactiver le système d'inertage au niveau de certaines positions géographiques présentant des températures très basses, ne causant pas un danger d'inflammabilité du carburant.
- chaque risque d'inflammabilité du carburant compris dans le réservoir de carburant est en outre estimé à partir du point éclair du carburant compris dans le réservoir de carburant, le point éclair du carburant étant la température à partir de laquelle le carburant compris dans le réservoir émet suffisamment de gaz inflammables pour former avec l'air ambiant un mélange gazeux qui s'enflamme à partir d'une flamme.
- Avantageusement, connaitre le point éclair permet d'obtenir un risque d'inflammabilité plus précis.
- N est compris entre 2 et 10. Pour rappel, N est le nombre de logiques d'activation compris dans la pluralité des N logiques d'activation dans laquelle on sélectionne une logique selon plusieurs conditions.
- Chaque logique d'activation est un chronogramme représentant l'état de fonctionnement du système d'inertage au cours du temps durant la mission, le système d'inertage pouvant être un état de fonctionnement dit activé durant au moins une partie de la mission et/ou pouvant être dans un état de fonctionnement dit désactivé durant au moins une autre partie de la mission.
- la condition relative au système d'inertage porte sur au moins :
   ∘ La consommation d'énergie du système d'inertage;
   ∘ L'usure d'au moins une pièce du système d'inertage;
   ∘ La pression d'alimentation en air du système d'inertage.
Avantageusement, la condition relative au système d'inertage permet d'obtenir une logique d'activation selon un critère souhaité par un opérateur. Lorsque la condition relative au système d'inertage porte sur la consommation d'énergie du système d'inertage, la logique d'activation choisie permet par exemple de réduire la consommation d'air/ d'énergie et de réutiliser l'air chaud économisé lorsque le système d'inertage est désactivé pour de générer de la propulsion.

Un deuxième aspect de l'invention concerne un procédé d'activation du système d'inertage du réservoir de carburant de l'aéronef, le procédé comportant l'étape suivante :
- Transmission à l'aéronef de la logique d'activation sélectionnée par le procédé de sélection selon le premier aspect de l'invention ;
- Activation du système d'inertage selon la logique d'activation sélectionnée.
Avantageusement, le procédé selon le deuxième aspect de l'invention permet d'activer le système d'inertage selon la logique d'activation selectionnée.

Un autre aspect de l'invention concerne un produit programme d'ordinateur comprenant des instructions qui, lorsque le programme est exécuté par un ordinateur, conduisent celui-ci à mettre en œuvre le procédé selon le premier aspect de l'invention.

Un autre aspect de l'invention concerne un support d'enregistrement lisible par ordinateur comprenant des instructions qui, lorsqu'elles sont exécutées par un ordinateur, conduisent celui-ci à mettre en œuvre le procédé selon le premier aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
La [Fig. 1] représente un exemple de logique d'activation d'un système d'inertage de réservoir de carburant d'aéronef.
La [Fig. 2] représente un schéma d'une système configuré pour mettre en œuvre un procédé de sélection d'une logique d'activation selon un premier aspect de l'invention et un procédé d'activation d'un système d'inertage selon un deuxième aspect de l'invention.
La [Fig. 3] représente un schéma synoptique du procédé de sélection d'une logique d'activation d'un système d'inertage selon le premier aspect de l'invention.
La [Fig. 4] représente un exemple de logique d'activation d'un système d'inertage de réservoir de carburant d'aéronef lorsque la logique d'activation est sélectionnée selon une condition relative à la pression d'alimentation du système d'inertage.
La [Fig. 5] représente un schéma synoptique du procédé d'activation d'un système d'inertage selon le deuxième aspect de l'invention.
La [Fig. 6] est un exemple de mise en œuvre du procédé de sélection d'une logique d'activation et du procédé d'activation d'un système d'inertage.

### DESCRIPTION DETAILLEE

Les figures sont présentées à titre indicatif et nullement limitatif de l'invention.

La [Fig. 2] représente un système 30 comprenant un aéronef 31 et un calculateur 32.

L'aéronef 31 est par exemple un avion ou un hélicoptère.

L'aéronef 31 comporte au moins un système avionique 311.

Selon un mode de réalisation, le système avionique 311 est configuré pour permettre à un pilote de préparer une mission de l'aéronef 31 et de générer des données relatives à la préparation de la mission. Dans ce mode de réalisation, le système avionique 311 est en outre configuré pour établir un canal d'échange bidirectionnel avec le calculateur et transmettre les données relatives à la préparation de la mission au calculateur 32.

Le canal d'échange bidirectionnel entre le système avionique 311 et le calculateur 32 est de préférence sécurisé et apte à utiliser une ou des technologies de communication de l'état de l'art, notamment au moins l'une des technologies de communication suivantes :
- un réseau de communication hertzien, par exemple un faisceau hertzien.
- un standard de communication Bluetooth^{®}.
- le réseau internet, grâce à différents standards de téléphonie mobile tels que les standards 3G, 4G et/ou 5G.
- un réseau de communication câblé.
- une antenne satellite.

Selon un autre mode de réalisation, l'aéronef 31 comprend un dispositif électronique portable non représenté, apte à communiquer avec le système avionique 311 de l'aéronef 31, et qui est configuré pour permettre au pilote de préparer la mission. Le dispositif électronique portable est également appelé dispositif électronique portable de préparation de mission.

Le dispositif électronique portable comporte de préférence une interface réseau comportant une antenne, une mémoire et un processeur, par exemple un microprocesseur. Le dispositif éléctronique portable comprend en outre un ou plusieurs moyens d'acquisition et de restitution de données, par exemple un écran tactile.

Le dispositif éléctronique portable est par exemple une tablette.

Le dispositif électronique portable peut être compris dans le système avionique 311 ou être extérieur au système avionique 311.

Lorsque le dispositif électronique portable est extérieur au système avionique 311, le dispositif électronique portable est configuré pour transmettre les données relatives à la préparation de la mission au système avionique 311 qui peut alors communiquer ces données au calculateur 32 ; ou bien le dispositif électronique portable est en outre configuré pour transmettre les données relatives à la préparation de la mission directement au calculateur 32 via un canal d'échange bidirectionnel. Dans ce cas, et de manière similaire à ce qui a été dit pour le système avionique, le canal d'échange bidirectionnel entre le dispositif électronique portable et le calculateur 32 est de préférence sécurisé et apte à utiliser une ou des technologies de communication de l'état de l'art, notamment au moins l'une des technologies de communication suivantes :
- un réseau de communication hertzien, par exemple un faisceau hertzien.
- un standard de communication Bluetooth^{®}.
- le réseau internet, grâce à différents standards de téléphonie mobile tels que les standards 3G, 4G et/ou 5G.
- un réseau de communication câblé.
- une antenne satellite.

L'aéronef comprend en outre un système électrique 312 et un système carburant 313.

Le système carburant 313 comprend au moins un réservoir de carburant, non représenté sur la figure 1 et un système d'inertage 3131 du réservoir de carburant.

Le système électrique 312 est configuré pour recevoir des données émises par le système avionique 311 et pour transmettre une puissance électrique au système d'inertage.

Le calculateur 32 comprend une interface réseau comportant une antenne non représentée, une mémoire et un processeur, par exemple un microprocesseur.

Le calculateur 32 est de préférence un ordinateur.

Selon un mode de réalisation, le système comprend une pluralité de calculateurs qui forment un centre de calcul. Dans la suite de la rédaction, on confond calculateur 32 et centre de calcul.

Un aspect de l'invention concerne un procédé de sélection d'une logique d'activation du système d'inertage 3131 du réservoir de carburant de l'aéronef 31 pour au moins une mission de l'aéronef 31.

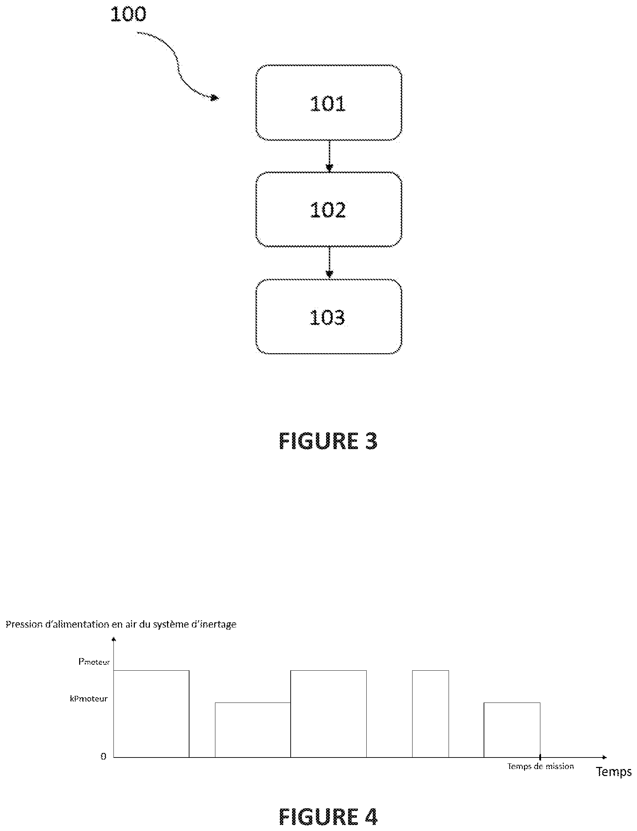

La [Fig. 3] est un schéma synoptique présentant les étapes d'un tel procédé 100.

Le procédé 100 comprend une première étape 101 de transmission de données relatives à la préparation de la mission au calculateur 32.

La mission comprend une phase, définie précédemment comme la deuxième phase, durant laquelle l'aéronef est en vol. Les données relatives à la préparation de la mission de l'aéronef 31 comprennent de préférence au moins l'une des données suivantes : type d'aéronef 31 qui va réaliser le vol, masse du carburant compris dans le réservoir de carburant de l'aéronef 31 avant le vol, température du carburant compris dans le réservoir de carburant de l'aéronef 31 avant le vol, profil du vol.

Les données relatives à la préparation de la mission peuvent en outre comprendre la position géographique de l'aéronef durant toute la mission par exemple.

Le profil du vol peut comporter au moins l'une des données suivantes : position géographique de l'aéronef 31 durant le vol, altitude de l'aéronef 31 durant le vol, vitesse air, nombre de Mach durant le vol.

En outre, des données météorologiques sont téléchargées par le calculateur 32 depuis une base de données externe interrogeable par le calculateur 32. Les données météorologiques sont moyennées ou cumulées, préférentiellement en utilisant deux échelles de temps : par minute et par heure.

Les données météorologiques téléchargées comprennent de préférence au moins l'une des données suivantes : température de l'air, vitesse du vent, rayonnement solaire global.

Les données météorologiques concernent les 12h à 24h suivant le début de la mission. Par exemple, pour chaque position de l'aéronef lors de la mission, les données météorologiques comprennent l'évolution de la température de l'air au niveau de chaque position de l'aéronef pendant 12 à 24 heures

Le procédé 100 comprend en outre une étape 102 d'estimation, par le calculateur 32, d'une pluralité de N risques d'inflammabilité du carburant compris dans le réservoir de carburant.

Chaque risque d'inflammabilité est estimé à partir d'une unique logique d'activation du système d'inertage choisie parmi une pluralité de N logiques d'activation du système d'inertage,des données relatives à la préparation de mission et des données météorologiques.

L'inflammabilité du carburant est évaluée pour toutes les minutes de la mission.

Le carburant est dit inflammable lorsqu'il libère des vapeurs comprises dans une certaine plage de température qui, au contact de l'air par exemple, risque de s'enflammer.

Un carburant est inflammable lorsque sa température est comprise entre la température LFL (de l'anglais LFL : lower flammability limit, est la limite inférieure d'inflammabilité) assurant un mélange trop pauvre de vapeur de carburant et d'air, et la température UFL (de l'anglais UFL : upper flammability limit, est la limite supérieure d'inflammabilité) assurant un mélange trop riche de vapeur de carburant et d'air.

N est un entier naturel non nul. Par exemple, N peut être compris entre 2 et 10. De préférence N est compris entre 5 et 10.

La pluralité de N logiques d'activation est de préférence mémorisée dans la mémoire du calculateur 32.

Selon un mode de réalisation, chaque risque d'inflammabilité est en outre estimé à partir du point éclair du carburant chargé dans le réservoir de carburant, le point éclair du carburant étant la température à partir de laquelle le carburant compris dans le réservoir émet suffisamment de gaz inflammables pour former avec l'air ambiant un mélange gazeux qui s'enflamme à partir d'une flamme.

Par exemple, pour un carburant de type AVGAS, le point éclair peut valoir: -40±10°C, et pour un carburant de type JET A-1 le point éclair peut valoir : +38±12°C.

De préférence, chaque risque d'inflammabilité est estimé grâce à un logiciel de certification, mémorisé dans la mémoire du calculateur 32 ou accessible par le calculateur 32 à travers un réseau et exécuté par le processeur du calculateur 32.

L'utilisation d'un logiciel de certification pour estimer chaque risque d'inflammabilité est avantageuse car un logiciel de certification garantit une évaluation de chaque risque d'inflammabilité selon les méthodes et critères de sureté certifiés et spécifiques à l'aéronef.

Le procédé comporte en outre une quatrième étape 103 de sélection d'une logique d'activation, parmi la pluralité des N logiques d'activation, à partir de la pluralité des N risques d'inflammabilité estimés et à partir d'une condition relative au système d'inertage.

L'étape 103 de sélection d'une logique d'activation est réalisée de préférence avec un logiciel dit d'optimisation mémorisé dans la mémoire du calculateur 32 ou accessible par le calculateur 32 à travers un réseau et exécuté par le processeur du calculateur 32.

De préférence, le logiciel d'optimisation reçoit en entrée chaque logique d'activation parmi la pluralité de N logiques d'activation, chaque risque d'inflammabilité parmi la pluralité des N risques d'inflammabilité et la condition relative au système d'inertage et sélectionne la logique d'activation ayant permis d'estimerun risque d'inflammabilité inférieur ou égal à un risque d'inflammabilité de référence estimé à partir de la logique d'activation de référence.

De préférence, le risque d'inflammabilité de référence est estimé à partir de la logique d'activation de référence et des données relatives à la préparation de la mission.

De préférence, la logique d'activation de référence est la logique d'activation utilisée pour la certification de l'aéronef, à partir d'un organisme de certification tel que la FAA ("Federal Aviation Administration") ou l'EASA ("European Union Aviation Safety Agency").

De préférence, la logique d'activation de référence est une logique d'activation durant laquelle le système d'inertage est dans un état de fonctionnement activé durant tout le temps de la mission, c'est-à-dire activé sans prendre en compte les conditions de la mission, les conditions étant par exemple les conditions météorologiques et la préparation de la mission. Dans ce mode de réalisation, il est possible d'estimer un risque d'inflammabilité inférieur ou égal au risque d'inflammabilité de référence car, selon les données relatives à la préparation de la mission, le carburant du réservoir de carburant n'est pas inflammable durant la totalité du temps de mission. En effet, lorsque le système d'inertage est activé durant les périodes ou le carburant n'est pas inflammable, réduire la concentration d'oxygène en augmentation la concentration de gaz inerte grâce au système d'inertage n'apporte pas une réduction du risque d'inflammabilité supplémentaire et le système d'inertage n'apporte pas de protection supplémentaire au réservoir de carburant.

La condition relative au système d'inertage peut porter sur au moins : la consommation d'énergie du système d'inertage, l'usure d'au moins une pièce du système d'inertage, la pression d'alimentation en air du système d'inertage ou une combinaison d'au moins deux éléments parmi les éléments cités.

On entend par consommation d'énergie par exemple, la quantité d'air utilisée pour alimenter le système d'inertage.

Par exemple, si la condition relative au système d'inertage porte sur la consommation d'énergie du système d'inertage, la condition peut être une minimisation de la consommation d'énergie du système d'inertage. Le logiciel de détermination peut déterminer la logique d'activation du système d'inertage, parmi la pluralité des N logiques d'activation, à partir de laquelle le risque d'inflammabilité estimé est inférieur ou égal au risque d'inflammabilité de référence et permettant d'obtenir une consommation d'énergie minimale du système d'inertage. De préférence, minimiser la consommation d'énergie d'un système d'inertage correspond à minimiser le temps d'activation du système d'inertage, c'est-à-dire le temps durant lequel le système d'inertage est dans un état de fonctionnement dit activé durant le temps de mission. Ainsi, le logiciel de détermination estime pour chaque logique d'activation parmi les N logiques d'activation, le temps d'activation du système d'inertage 3122 et détermine la logique d'activation parmi les N logiques d'activation à partir de laquelle le risque d'inflammabilité estimé est inférieur ou égal au risque d'inflammabilité de référence et pour laquelle le temps d'activation du système d'inertage est minimal.

Par exemple, si la condition relative au système d'inertage porte sur l'usure d'au moins une pièce du système d'inertage, la condition peut être une minimisation de l'usure de la pièce. La pièce est par exemple un filtre ou une membrane compris dans le système d'inertage.

L'usure de la pièce peut être estimée à partir de la durée d'exposition de ladite pièce à l'ozone en altitude ; la condition relative au système d'inertage peut alors par exemple être une minimisation du temps d'activation du système d'inertage en altitude afin de réduire le temps d'exposition du système d'inertage à l'ozone.

L'usure de la pièce peut être estimée à partir de la durée d'exposition de la pièce à la pollution lorsque l'aéronef est au sol ou proche du sol ; la condition relative au système d'inertage peut alors par exemple être une minimisation du temps d'activation du système d'inertage au sol afin de réduire la durée d'exposition de la pièce à la pollution.

Selon un mode de réalisation dans lequel la condition relative au système d'inertage porte sur la pression d'alimentation en air d'une pièce du système d'inertage, la condition peut être une minimisation de la pression d'alimentation en air du système d'inertage. Dans ce mode de réalisation, chaque logique d'activation est un diagramme représentant l'évolution de la pression d'alimentation du d'inertage au cours du temps, le système d'inertage pouvant être dans un premier ou un deuxième état de fonctionnements dit activé durant au moins une partie du temps et/ou pouvant être dans un état de fonctionnement dit désactivé durant au moins une autre partie du temps. Un premier état activé est un état durant lequel la pression d'alimentation en air est égale à la pression moteur ; un deuxième état activé est un état durant lequel la pression d'alimentation en air est égale à une fraction de la pression moteur. La [Fig. 4] est un exemple de logique d'activation du système d'inertage selon ce mode de réalisation. Ainsi, l'axe horizontal de la logique d'activation représente le temps et l'axe vertical de la logique d'activation représente la pression d'alimentation en air du système d'inertage. L'unité de la pression d'alimentation en air est par exemple en Bar ou Pascal. La pression d'alimentation en air du système d'inertage peut prendre trois valeurs : Pmoteur, k*Pmoteur (qu'on écrit kPmoteur sur la figure 3) et 0 par exemple, avec k un facteur réel compris entre 0 et 1. Lorsque la pression d'alimentation en air est égale à Pmoteur, le système d'inertage est dans le premier état activé, lorsque la pression d'alimentation en air est égale à kPmoteur, le système d'inertage est dans le deuxième état activé et lorsque la pression d'alimentation en air est égale à 0, le système d'inertage est dans un état désactivé.

Notons P la pression d'alimentation en air du système d'inertage et t le temps sur lequel est défini la logique d'activation.

Dans ce mode de réalisation, la logique d'activation sélectionnée est la logique pour laquelle le risque d'inflammabilité estimé est inférieur ou égal au risque d'inflammabilité de référence, et pour laquelle à la fois le temps d'activation du système d'inertage est minimal et la valeur de l'intégrale : ${\int }_{t = 0}^{t = Temps de mission} P . dt$ est minimale.

Un autre aspect de l'invention concerne un procédé d'activation du système d'inertage 3131 du réservoir de carburant de l'aéronef 31

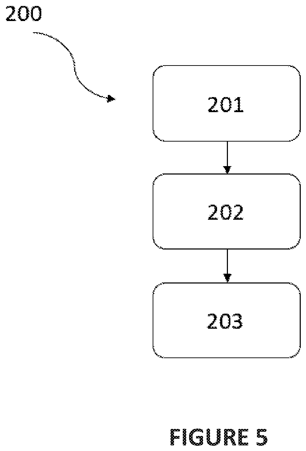

La [Fig. 5] représente un schéma synoptique des étapes du procédé 200 d'activation.

Le procédé d'activation 200 du système d'inertage comprend une première étape 201 de transmission, par le calculateur 32 à l'aéronef 31 et en particulier au système avionique de l'aéronef 31, de la logique d'activation déterminée par le procédé 100 de détermination d'une logique d'activation du système d'inertage 3122.

Le procédé 200 d'activation peut comprendre une étape 202 de transmission de la logique d'activation déterminée, par le système avionique 311 au système électrique 3121.

Le procédé 200 d'activation comprend en outre une étape 203 d'activation du système d'inertage 3122 selon la logique d'activation déterminée. L'étape 203 d'activation du système d'inertage 3122 est réalisée grâce au système électrique 3121 configuré pour émettre une puissance électrique vers le système d'inertage selon la logique d'activation déterminée.

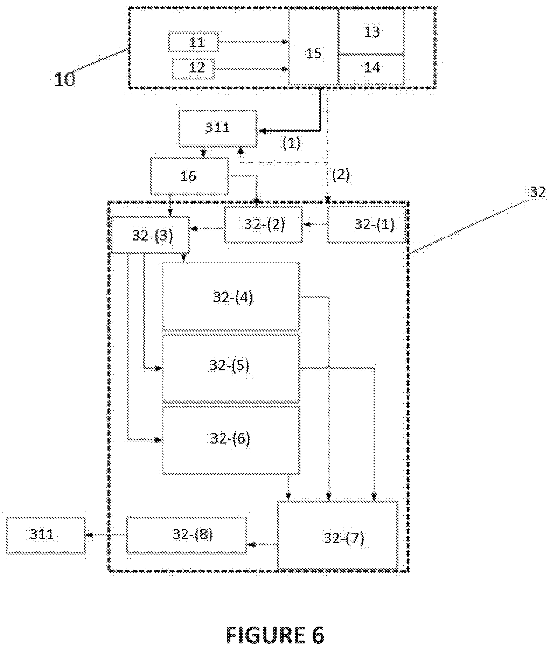

La [Fig. 6] est un exemple de mise en œuvre du procédé 100 de sélection d'une logique d'activation représenté à la [Fig. 4] et du procédé 200 d'activation représenté à la [Fig. 5] pour un vol prévu d'un avion.

En référence à la [Fig. 6], la référence 10 correspond à la préparation de mission réalisée par le pilote sur/dans le système avionique, ou via le dispositif électronique portable en lien de communication avec le système avionique.

En référence à la [Fig. 6], la référence 11 correspond à la destination à atteindre et la référence 12 correspond au type d'avion.

En référence à la [Fig. 6], la référence 13 correspond à des données correspondant à un vol prévu : vol prévu et en particulier à l'heure du vol, position de l'avion lors du vol et way point (waypoint correspond à un point de cheminement ou point de virage et désigne, en navigation, un point de la route à atteindre où doit avoir lieu un changement de cap).

En référence à la [Fig. 6], la référence 14 correspond à la quantité de carburant embarquée dans l'avion.

En référence à la [Fig. 6], la référence 15 correspond à la préparation de mission.

En référence à la [Fig. 6], la référence 311 correspond au système avionique.

En référence à la [Fig. 6], la référence (1) correspond à un mode de réalisation dans lequel la transmission de la préparation de mission est réalisée par le dispositif électronique portable au système avionque 311.

En référence à la [Fig. 6], la référence (2) correspond au mode de réalisation dans lequel la transmission de la préparation de mission est réalisée par le dispositif électronique portable à la fois au système avionique 311 et au calculateur 32.

En référence à la [Fig. 6], la référence 16 correspond à la transmission de la préparation de mission au calculateur 32.

En référence à la [Fig. 6], la référence 32 correspond au calculateur.

En référence à la [Fig. 6], la référence 32-(1) correspond aux prévisions météo mondiales de moins de 24h.

En référence à la [Fig. 6], la référence 32-(2) correspond à la météo prévue durant le vol.

En référence à la [Fig. 6], la référence 32-(3) correspond à un lancement de simulation.

En référence à la [Fig. 6], la référence 32-(4) correspond à une estimation, par le logiciel de ceritfication, du risque d'inflammabilité des vapeurs de carburant de l'avion selon la première logique d'activation parmi les N logiques d'activations.

En référence à la [Fig. 6], la référence 32-(5) correspond à une estimation, par le logiciel de ceritfication, du risque d'inflammabilité des vapeurs de carburant de l'avion selon la deuxième logique d'activation parmi les N logiques d'activations.

En référence à la [Fig. 6], la référence 32-(6) correspond à une estimation, par le logiciel de ceritfication, du risque d'inflammabilité des vapeurs de carburant de l'avion selon la N-ième logique d'activation parmi les N logiques d'activations. (sur la [Fig. 6], sont représentées seulement les estimations des risques d'inflammabilités calculés respectivement à partir des première, deuxième et N-ième logiques d'activations pour plus de clarté sur la [Fig. 6], cependant N risques d'inflammabilités sont estimés à partir des N logiques d'activation dans cette mise en œuvre mais ne sont pas représentés).

En référence à la [Fig. 6], la référence 32-(7) correspond à la sélection, par le logiciel d'optimisaiton, d'une logique d'activation parmi les N logiques d'activations, la logique d'activation sélectionnée étant à la fois conforme à une certification : par exemple la logique d'activation selectionnée est calculée à partir d'un risque d'inflammabilité inférieur ou égal à un risque d'inflammabilité permettant de calculer la logique d'actiovation de référence et permetant à la fois de réduire l'usage du système d'inertage.

En référence à la [Fig. 6], la référence 32-(8) correspond à une transmission de la logique d'activation sélectionnée à l'avion.

En référence à la [Fig.6], la référence 311 correspond au système avionique de l'avion qui reçoit la logique d'activation sélectionnée.

Des simulations ont été réalisées en considérant une valeur du point éclair connue, et une valeur du point éclair inconnue et estimée par le logiciel de certification FTFAM ^{©}. Pour un aéronef donné, ces simulations ont permis de montrer que :
- lorsque le point éclair est connu avec une précision de 1°C, le système d'inertage peut être désactivé durant 56% des vols réalisés par l'aéronef. Ainsi, la logique d'activation déterminée pour 56% des vols comprend uniquement l'état de fonctionnement désactivé du système d'inertage durant le temps de mission.
- lorsque le point éclair est connu avec une précision de 4°C, le système d'inertage peut être désactivé durant 45% des vols réalisés par l'aéronef. Ainsi, la logique d'activation déterminée pour 45% des vols comprend uniquement l'état de fonctionnement désactivé du système d'inertage durant le temps de mission.
- lorsque le point éclair est inconnu (prise en compte des dispersions de production typique), le système d'inertage peut être désactivé durant 16% des vols réalisés par l'aéronef. Ainsi, la logique d'activation déterminée pour 16% des vols comprend uniquement l'état de fonctionnement désactivé du système d'inertage durant le temps de mission.

## Revendications

1. Procédé (100) de sélection d'une logique d'activation d'un système d'inertage (3122) d'au moins un réservoir de carburant d'un aéronef (31) pour une mission de l'aéronef (31), le procédé (100) comportant les étapes suivantes :
- Transmission (101) de données relatives à la préparation de la mission à un calculateur (32);
- Estimation (102), par le calculateur (32), d'une pluralité de N risques d'inflammabilité du carburant compris dans le réservoir de carburant, N étant un entier naturel non nul, chaque risque d'inflammabilité étant estimé à partir :
∘ d'une unique logique d'activation du système d'inertage choisie parmi une pluralité de N logiques d'activation du système d'inertage (3122) ; et
∘ des données relatives à la préparation de la mission ;
le procédé étant **caractérisé en ce qu'**il comporte en outre l'étape de
- Sélection (103) d'une logique d'activation, parmi la pluralité des N logiques d'activation, à partir de la pluralité des N risques d'inflammabilité estimés et à partir d'une condition relative au système d'inertage (3122) .

2. Procédé (100) selon la revendication précédente **caractérisé en ce que** le risque d'inflammabilité estimé à partir de la logique d'activation sélectionnée est inférieur ou égal à un risque d'inflammabilité de référence estimé à partir d'une logique d'activation de référence.

3. Procédé (100) selon la revendication précédente **caractérisé en ce que** la mission comprend une phase durant laquelle l'aéronef est en vol, et **en ce que** les données relatives à la préparation de la mission de l'aéronef (31) comprennent au moins l'une des données suivantes :
- Type d'aéronef (31) ;
- Masse du carburant compris dans le réservoir de carburant de l'aéronef (31) avant le vol ;
- Température du carburant compris dans le réservoir de carburant de l'aéronef (31) avant le vol ;
- Destination du vol ;
- Profil du vol, le profil du vol comprenant au moins l'une des données suivantes :
∘ Position géographique de l'aéronef (31) durant le vol ;
∘ Altitude de l'aéronef (31) durant le vol ;
∘ Vitesse air ou nombre de Mach durant le vol .

4. Procédé (100) selon l'une quelconques des revendications précédentes **caractérisé en ce que** chaque risque d'inflammabilité parmi les N risques d'inflammabilité est en outre estimé à partir de données météorologiques.

5. Procédé (100) selon la revendication précédente **caractérisé en ce que** chaque risque d'inflammabilité du carburant compris dans le réservoir de carburant est en outre estimé à partir du point éclair du carburant compris dans le réservoir de carburant, le point éclair du carburant étant la température à partir de laquelle le carburant compris dans le réservoir émet suffisamment de gaz inflammables pour former avec l'air ambiant un mélange gazeux qui s'enflamme à partir d'une flamme.

6. Procédé (100) selon l'une quelconque des revendications précédentes **caractérisé en ce que** chaque logique d'activation est un chronogramme représentant l'état de fonctionnement du système d'inertage au cours du temps durant la mission, le système d'inertage pouvant être un état de fonctionnement dit activé durant au moins une partie de la mission et/ou pouvant être dans un état de fonctionnement dit désactivé durant au moins une autre partie de la mission.

7. Procédé (100) selon l'une quelconque des revendications précédentes **caractérisé en ce que** la condition relative au système d'inertage (3122) porte sur au moins:
- La consommation d'énergie du système d'inertage (3122);
- L'usure d'au moins une pièce du système d'inertage (3122);
- La pression d'alimentation en air du système d'inertage (3122).

8. Procédé (200) d'activation du système d'inertage du réservoir de carburant de l'aéronef (31), le procédé (200) comportant l'étape suivante :
- Transmission (201) à l'aéronef (31) de la logique d'activation sélectionnée par le procédé (100) de sélection selon l'une quelconque des revendications 1 à 7 ;
- Activation (203) du système d'inertage (3122) selon la logique d'activation sélectionnée.

9. Produit programme d'ordinateur comprenant des instructions qui, lorsque le programme est exécuté par un ordinateur, conduisent celui-ci à mettre en œuvre le procédé selon l'une quelconque des revendications 1 à 8.

10. Support d'enregistrement lisible par ordinateur comprenant des instructions qui, lorsqu'elles sont exécutées par un ordinateur, conduisent celui-ci à mettre en œuvre le procédé selon l'une quelconque des revendications 1 à 8.

## Patentansprüche

1. Verfahren (100) zur Auswahl einer Aktivierungslogik für ein Inertisierungssystem (3122) für mindestens einen Treibstofftank eines Luftfahrzeugs (31) für einen Einsatz des Luftfahrzeugs (31), wobei das Verfahren (100) die folgenden Schritte umfasst:
- Übertragung (101) von Daten bezüglich der Einsatzvorbereitung an einen Rechner (32);
- Schätzung (102) einer Vielzahl von N Entzündungsrisiken des im Treibstofftank enthaltenen Treibstoffs durch den Rechner (32), wobei N eine von Null verschiedene natürliche Zahl ist und jedes Entzündungsrisiko geschätzt wird anhand:
∘ einer einzigen Aktivierungslogik für das Inertisierungssystem, die aus einer Vielzahl von N Aktivierungslogiken für das Inertisierungssystem (3122) ausgewählt wird; und
∘ Daten zur Einsatzvorbereitung; wobei das Verfahren **dadurch gekennzeichnet ist, dass** es ferner folgenden Schritt umfasst:
- Auswahl (103) einer Aktivierungslogik aus der Vielzahl der N Aktivierungslogiken anhand der Vielzahl der N geschätzten Entzündungsrisiken und einer Bedingung bezüglich des Inertisierungssystems (3122).

2. Verfahren (100) nach dem vorstehenden Anspruch, **dadurch gekennzeichnet, dass** das anhand der ausgewählten Aktivierungslogik geschätzte Entzündungsrisiko kleiner oder gleich einem anhand einer Referenz-Aktivierungslogik geschätzten Referenz-Entzündungsrisiko ist.

3. Verfahren (100) nach dem vorstehenden Anspruch, **dadurch gekennzeichnet, dass** der Einsatz eine Phase umfasst, in der sich das Luftfahrzeug im Flug befindet, und dass die Daten zur Einsatzvorbereitung des Luftfahrzeugs (31) mindestens eine der folgenden Angaben umfassen:
- Flugzeugtyp (31);
- Masse des im Treibstofftank des Luftfahrzeugs (31) vor dem Flug enthaltenen Treibstoffs;
- Temperatur des im Treibstofftank des Luftfahrzeugs (31) befindlichen Treibstoffs vor dem Flug;
- Flugziel;
- Flugprofil, wobei das Flugprofil mindestens eine der folgenden Angaben umfasst:
∘ Geografische Position des Luftfahrzeugs (31) während des Fluges;
∘ Flughöhe des Luftfahrzeugs (31) während des Fluges;
∘ Luftgeschwindigkeit oder Machzahl während des Fluges.

4. Verfahren (100) gemäß einem der vorstehenden Ansprüche, **dadurch gekennzeichnet, dass** jedes der N Entzündungsrisiken zusätzlich anhand von meteorologischen Daten abgeschätzt wird.

5. Verfahren (100) nach dem vorstehenden Anspruch, **dadurch gekennzeichnet, dass** jedes Entzündungsrisiko des im Treibstofftank enthaltenen Treibstoffs zusätzlich anhand des Flammpunkts des im Treibstofftank enthaltenen Treibstoffs abgeschätzt wird, wobei der Flammpunkt des Treibstoffs die Temperatur ist, ab der der im Tank enthaltene Treibstoff genügend brennbare Gase abgibt, um mit der Umgebungsluft ein Gasgemisch zu bilden, das sich durch eine Flamme entzünden lässt.

6. Verfahren (100) gemäß einem der vorstehenden Ansprüche, **dadurch gekennzeichnet, dass** jede Aktivierungslogik ein Zeitdiagramm ist, das den Betriebszustand des Inertisierungssystems im Zeitverlauf während des Einsatzes darstellt, wobei das Inertisierungssystem während mindestens eines Teils des Einsatzes in einem sogenannten aktivierten Betriebszustand sein kann und/oder während mindestens eines anderen Teils des Einsatzes in einem sogenannten deaktivierten Betriebszustand sein kann.

7. Verfahren (100) nach einem der vorstehenden Ansprüche, **dadurch gekennzeichnet, dass** die Bedingung bezüglich des Inertisierungssystems (3122) mindestens Folgendes umfasst:
- den Energieverbrauch des Inertisierungssystems (3122);
- den Verschleiß mindestens eines Teils des Inertisierungssystems (3122);
- den Luftzufuhrdruck des Inertisierungssystems (3122).

8. Verfahren (200) zur Aktivierung des Inertisierungssystems des Treibstofftanks
des Luftfahrzeugs (31), wobei das Verfahren (200) den folgenden Schritt umfasst:
- Übertragung (201) an das Luftfahrzeug (31) der vom Auswahlverfahren (100) ausgewählten Aktivierungslogik gemäß einem der Ansprüche 1 bis 7 ;
- Aktivierung (203) des Inertisierungssystems (3122) nach der ausgewählten Aktivierungslogik.

9. Computerprogrammprodukt, das Anweisungen umfasst, die, wenn das Programm von einem Computer ausgeführt wird, diesen veranlassen, das Verfahren gemäß einem der Ansprüche 1 bis 8 durchzuführen.

10. Computerlesbares Aufzeichnungsmedium, das Anweisungen umfasst, die, wenn sie von einem Computer ausgeführt werden, diesen dazu veranlassen, das Verfahren gemäß einem der Ansprüche 1 bis 8 durchzuführen.

## Claims

1. A method (100) for selecting an activation logic for an inerting system (3122) of at least one fuel tank of an aircraft (31) for a mission of the aircraft (31), the method (100) including the following steps of:
- Transmitting (101) data relating to the preparation of the mission to a calculator (32);
- Estimating (102), by the calculator (32), a plurality of N flammability risks of fuel included in the fuel tank, N being a non-zero natural number, each flammability risk being estimated from :
∘ a single activation logic of the inerting system selected from a plurality of N activation logics of the inerting system (3122); and
∘ data relating to the preparation of the mission;
the method being **characterized in that** it further comprises a step of:
- Selecting (103) an activation logic, among the plurality of N activation logics, from the plurality of N flammability risks estimated and from a condition relating to the inerting system (3122).

2. The method (100) according to the preceding claim, **characterised in that** the flammability risk estimated from the activation logic selected is less than or equal to a reference flammability risk estimated from a reference activation logic.

3. The method (100) according to the preceding claim, **characterised in that** the mission comprises a phase during which the aircraft is in flight, and **in that** the data relating to the preparation of the mission of the aircraft (31) comprise at least one of the following data:
- Aircraft type (31);
- Mass of fuel included in the fuel tank of the aircraft (31) prior to flight;
- Temperature of fuel included in the fuel tank of the aircraft (31) prior to flight;
- Flight destination;
- Flight profile, the flight profile comprising at least one of the following data:
∘ Geographical position of the aircraft (31) during flight;
∘ Altitude of the aircraft (31) during flight;
∘ Air speed or Mach number during flight.

4. The method (100) according to any of the preceding claims, **characterised in that** each flammability risk among the N flammability risks is further estimated from meteorological data.

5. The method (100) according to the preceding claim, **characterised in that** each flammability risk of fuel included in the fuel tank is further estimated from the flash point of fuel included in the fuel tank, the flash point of the fuel being the temperature from which fuel included in the tank emits sufficient flammable gases to form with the ambient air a gas mixture which ignites from a flame.

6. The method (100) according to any of the preceding claims, **characterised in that** each activation logic is a time chart representing the operating state of the inerting system over time during the mission, wherein the inerting system can be in a so-called activated operating state during at least one part of the mission and/or can be in a so-called deactivated operating state during at least another part of the mission.

7. The method (100) according to any of the preceding claims, **characterised in that** the condition relating to the inerting system (3122) concerns at least:
- Energy consumption of the inerting system (3122);
- Wear of at least one piece of the inerting system (3122);
- Air supply pressure to the inerting system (3122).

8. A method (200) for activating the fuel tank inerting system of an aircraft (31), the method (200) including the following steps of:
- Transmitting (201) to the aircraft (31) the activation logic selected by the selection method (100) according to any of claims 1 to 7;
- Activating (203) the inerting system (3122) according to the activation logic selected.

9. A computer program product comprising instructions which, when the program is executed by a computer, cause the same to implement the method according to any of claims 1 to 8.

10. A computer-readable recording medium comprising instructions which, when executed by a computer, cause the same to implement the method according to any of claims 1 to 8.
